(19) Europäisches Patentamt / European Patent Office / Office européen des brevets

(11) **EP 2 315 046 B1**

(12) **EUROPEAN PATENT SPECIFICATION**

(45) Date of publication and mention
of the grant of the patent:
**07.11.2012 Bulletin 2012/45**

(51) Int Cl.:
*G01S 7/52* (2006.01)       *G01S 15/89* (2006.01)
*G06T 5/00* (2006.01)

(21) Application number: **09173465.7**

(22) Date of filing: **20.10.2009**

(54) **Method and device for pre-processing Doppler ultrasound data**

Verfahren und Vorrichtung zur Vorverarbeitung von Doppler-Ultraschalldaten

Procédé et dispositif de prétraitement de données d'ultrasons Doppler

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**27.04.2011 Bulletin 2011/17**

(73) Proprietor: **TomTec Imaging Systems GmbH**
**85716 Unterschleissheim (DE)**

(72) Inventor: **Brabec, Stefan**
**82319 Starnberg (DE)**

(74) Representative: **Müller Schupfner & Partner**
**Bavariaring 11**
**80336 München (DE)**

(56) References cited:
**WO-A1-2008/086820       US-A1- 2005 129 297**

• BOULT T ET AL: "G-neighbors" PROCEEDINGS OF THE SPIE - THE INTERNATIONAL SOCIETY FOR OPTICAL ENGINEERING, SPIE, US, vol. 2060, 9 September 1993 (1993-09-09), pages 96-109, XP007912145 ISSN: 0277-786X
• TOMASI C ET AL: "Bilateral filtering for gray and color images" 6TH INTERNATIONAL CONFERENCE ON COMPUTER VISION. ICCV '98. BOMBAY, JAN. 4 - 7, 1998; [IEEE INTERNATIONAL CONFERENCE ON COMPUTER VISION], NEW YORK, NY : IEEE, US, 4 January 1998 (1998-01-04), pages 839-846, XP000926378 ISBN: 978-0-7803-5098-4
• CHOUDHURY ET AL: "The trilateral filter for high contrast images and meshes" EUROGRAPHICS SYMPOSIUM ON RENDERING 2003, 25 June 2003 (2003-06-25), - 27 June 2003 (2003-06-27) pages 186-196, XP040167472 Leuven, Belgium DOI: 10.1145/1198555.1198565

**Description**

The present invention is directed to a method and a device for pre-processing a dataset of Doppler ultrasound data, and to a computer program product for performing the above method.

Doppler ultrasound is a method of measuring the velocity of moving objects, for example of blood flow within the body. Most modern sonographic machines use pulsed Doppler to measure velocity. Thus, the sonographic machine transmits and receives a series of pulses. The frequency shift of each pulse is ignored, however the relative phase changes of the pulses are used to obtain the frequency (Doppler) shift, since frequency is the rate of change of phase. The major advantage of pulsed Doppler over continuous wave Doppler is that the time between the transmitted and received pulses can be converted into a distance (with knowledge of the speed of sound), and therefore distance information is obtained, and gain correction can be applied. Thereby, a dataset of directional velocity data is obtained, wherein positive data may e.g. indicate velocity towards the ultrasound probe, and negative data may indicate velocity away from the ultrasound probe. Usually, the dataset is viewed by producing a colour-coded map of Doppler shifts (colour flow map) and superimposing it onto a B-mode ultrasound image.

The major disadvantage of pulsed Doppler is that the measurements can suffer from aliasing, because a phase change higher than +180° or lower than -180° is wrongly interpreted as a phase of the opposite sign. For example, a phase change of +190° is wrongly interpreted as a phase change of -170°. Therefore, regions in which the movement or flow has a high velocity for example in the positive direction will be interspersed with pixels or whole areas in which the velocity appears to be highly negative. Of course, by adjusting the pulse length and thereby the bandwidth, aliasing can be adjusted. However, to some extent, the practitioners are used to aliasing effects and can interpret colour-coded maps of Doppler shifts correctly, even if some aliasing has occurred. Therefore, aliasing is generally tolerated in Doppler ultrasound data and has to be considered when developing further processing methods for Doppler ultrasound data.

In order to further process Doppler ultrasound data, also referred to as "ultrasound colour Doppler data" because of its usual colour-coded representation, it can be advantageous to filter the Doppler ultrasound data in order to reduce the noise level. This is often a prerequisite for the further processing, for example in order to satisfactorily render the Doppler ultrasound dataset by e.g. 3D volume rendering or 2D rendering.

Filtering to reduce noise (e.g. low-pass filtering) is also called smoothing in the following. For the smoothing of B-mode data, which is grey-level data without any sign information, one often uses a standard convolution filter in which the data is convoluted with a Gaussian kernel. Thereby, high frequency noise is effectively reduced.

For Doppler ultrasound data, however, the inventor has found that such standard filter is not appropriate, because applying the standard convolution method to such data smears out the sign (i.e. directional information) and also results in unwanted zero-crossing at the border regions between negative and positive directions. Therefore, Doppler ultrasound data is often left unfiltered.

WO 2008/086820 A1 discloses a method of interpolating Doppler ultrasound data having signed values. The method comprises splitting the ultrasound data into an absolute value and a sign value and interpolating the absolute value and the sign value separately. This interpolation method can be used for reconstructing a Cartesian dataset out of an acoustic dataset. Further, according to an embodiment a filtering method is applied to the sign values and/or the absolute values.

The article "G-neighbors" by Terrance Boult and Robert R. Melter, SPIE Vol. 2060, Vision Geometry II (1993), pages 96-108 discloses image processing methods involving G-neighbors, in particular for detail preserving smoothing and morphology. G-neighbors are pixels which satify a simple symmetric predicate, for example the absolute value of the difference between the pixels is less than a given threshold.

It is an object of the invention to provide a pre-processing scheme for Doppler ultrasound data which allows further processing of the data, without suppressing aliasing effects.

This object is fulfilled by the method according to claim 1, the device according to claim 8 and the computer program product according to claim 10.

The inventive method comprises an edge-preserving smoothing method combined with an upsampling step and thereby fulfils both the need for a certain amount of low-pass filtering, in order to achieve e.g. a reasonable rendering quality, and also the need to keep the sharp edges in order to retain or even emphasize the aliasing regions.

The inventive method is applied to a dataset of Doppler ultrasound data, which generally consists of a set of sample points, wherein each sample point preferably contains a signed value, i.e. having an absolute value and a sign (+/-). For example, positive values can indicate a direction of velocity towards the ultrasound probe, whereas negative values indicate a direction of velocity away from the ultrasound probe or vice versa. The dataset can be , two-dimensional (2D), three-dimensional (3D) or four-dimensional (4D). A 2D dataset corresponds to an image, a 3D dataset to an image volume and a 4D dataset to time-varying data, i.e. a time series of 3D datasets. The dataset may be in acoustic coordinates, i.e. in the probe specific coordinate system in which ultrasound data are produced during the acquisition. Alternatively, the dataset may already be scan-converted, i.e. converted to a standard coordinate system such as Cartesian coordinates. In the detailed description of embodiments, the examples shown are in 1 D or 2D, but evidently, the method is applicable for all dimensions and may use all dimensions or only a subset of the dimensions of the dataset for its work. For example, it is possible to upsample and smooth the dataset only in the spatial dimensions, leaving any variations in the time dimension unchanged. Alternatively, it is possible for time-varying volume data acquired through real-time 3D ultrasound, to filter the dataset by including data from previous volumes. For review applications, where the complete dataset is stored in memory, the filtering step may also use data from the next volume(s) in time, as well as from the previous volume(s).

Such data can either come directly from an attached ultrasound device, i.e. it is pre-processed directly after acquisition. Alternatively, the method can be carried out as part of a review process, wherein the dataset of Doppler ultrasound data is stored after acquisition, e.g. offline, and then pre-processed.

The dataset of Doppler ultrasound data is first upsampled in at least one dimension, wherein sample values for the upsampled dataset is calculated by Interpolation. Thus, the resolution of the dataset is increased in at least one dimension. This can be thought of e.g. as inserting new data points between the existing data points, or by simply converting the dataset to a finer grid, wherein the existing/original data points may or may not be preserved. In some embodiments, the resolution is increased by a factor of 2, 4, 6 or 8. For example, one may insert an integer number of data points in the respective upsampled dimension between the existing data points, in particular an uneven number and most preferably a number $(2^N-1)$, to arrive at typical dataset sizes of $2^N$ data points. Of course, it is also possible to increase the resolution by a non-integer factor, e.g. 1.5.

During the upsampling step, it may be advantageous to use a data type having a higher precision (more bit per sample point) in order to avoid artefacts because of quantization. Such data type of higher precision can be used for the upsampled dataset (which is stored in an intermediate buffer), whereas the filtered dataset can be stored again with the original, lower precision data type.

The sample values for the upsampled dataset, or the sample values for the newly inserted data points, are calculated by interpolation, generally interpolation in between the existing original data points. Some preferred interpolation schemes which retain and emphasize any aliasing regions will be discussed below.

In the final filtering step , the upsampled dataset is filtered with an edge-preserving smoothing method. Preferably, such filter should suppress noise and sampling grid artefacts. On the other hand, boundaries where positive and negative velocities are adjacent to each other should be retained or emphasized by the filtering step.

Different filtering methods which attempt to average within smooth regions, but prevents blurring across edges are disclosed in the references cited in the article "Bi-lateral Filtering for Grey and Color Images" by C. Tomasi and R. Manduchi in Proceedings of the 1998 IEEE International Conference on Computer Vision, Bombay, India.

Each of the upsampling and filtering steps can be carried out in all dimensions of the dataset, or only in a subset of 1, 2 or 3 dimensions. In the invention, the filtering step will be applied in those dimensions which have been upsampled.

According to the invention, the edge-preserving smoothing method is a non-linear filter. The non-linear part of the filter ensures that only data points having the same sign as a data point at a certain location contribute to the smoothed value at that certain location. Such filter may be implemented by using any type of smoothing method, while ensuring that before any data point can contribute to the smoothed value at a certain location, it is checked whether that data point has the same sign as the data point at that certain location. For example, the filter may be a combination of a convolution with a Gaussian or box function kernel, and a boundary function which ensures that one will never smooth over regions with opposite signs. The boundary function may for example give a value of 1 when two values have the same sign, and a value of 0 otherwise. Preferably, the edge-preserving smoothing method may comprise an at least bi-lateral filter, in which the sign weighting or boundary function described above is combined with domain filtering. Domain filtering means that the smoothed value is an average of the sample values of other data points which are nearby (close in the domain). Preferably, domain filtering is realized by convoluting the data set with a suitable kernel function, for example a Gaussian function or box function.

The general idea underlying bi-lateral filtering is to do in the range of an image (i.e. the sample values) what traditional filters do in its domain (i.e. in the spatial dimensions). Thus, the smoothed value is an average of the sample values of other data points which are both nearby (close in the domain) and similar (close in the range). Thus, a bi-lateral filter replaces a pixel's value by a weighted average of its neighbours in both space and intensity. This preserves sharp edges by systematically excluding pixels across a discontinuity (edge) from consideration.

Furthermore, a bilateral filter as described in the article by C. Tomasi and R. Manduchi mentioned above may be used. In this article, bi-lateral filtering is explained for colour images, meaning pictures having three colour channels. The present application is different, since there is only one channel, but each sample value preferably also has a sign. However, the method disclosed in the article can be adapted such that the bi-lateral filter will replace a high positive sample value at the centre of the spatial support by an average of those sample points with high positive values in its vicinity, and will ignore the sample points with negative velocity values or use a low weight for these points. Conversely, when the filter is centred on a high negative sample value, the positive sample values are ignored instead. Thereby, a good low-pass filter is achieved, while at the same time crisp edges are preserved and boundaries where positive and negative velocities are adjacent to each other are not blurred over.

An example of bi-lateral filtering is shift-invariant Gaussian filtering, in which both the closeness function and the similarity function are Gaussian functions of the Euclidean distance between their arguments.

Thus, preferably the filtering step comprises a non-linear bi-lateral filter where one part consists of a low-pass filter kernel, while the other part ensures that boundary regions are retained.

According to one embodiment, the filtering step calculates a filtered value F(Vp) for a certain data point at location p within the dataset from the following formula:

$$F(V_p) = sign(V_p) \frac{1}{W_p} \sum_{q \in S} K(\|p - q\|) B(V_p, V_q) abs(V_p)$$

wherein K is a filtering kernel, in particular a Gaussian or box function, S is the spatial support, $\|p - q\|$ is the distance between points p and q, Vp is the unfiltered sample value at location p, abs($V_p$) and sign(Vp) are functions returning the absolute value and sign, respectively, of the sample value Vp, Wp is a normalisation factor, and B(Vp, Vq) is a non-linear function given by

$$B(V_p, V_q) = \begin{cases} 1 & if\ sign(V_p) = sign(V_q) \\ 0 & if\ sign(V_p) \neq sign(V_q) \end{cases}.$$

The spatial support S is the group of unfiltered sample points contributing to the filtered value F(Vp), for example a set of 9x9 sample points centred on p. The normalisation factor is given by

$$W_p = \sum_{q \in S} K(\|p - q\|) B(V_p, V_q) .$$

According to an optional feature of the invention, in addition to bi-lateral weighting, an arbitrary number of weighting functions can be combined or added. For example, the filtering step may comprise a tri-lateral filter comprising domain filtering and sign weighting as described above, and in addition modulus filtering. The modulus filter may for example comprise a function that computes the difference in absolute velocities. This tri-lateral filter would then only filter those areas with velocity data having small variations (noise) in the same direction. Alternatively or in addition, the filtering step may also use input from other channels, for example, the B-mode data of the same area. This may for example result in a tri-lateral filter using spatial averaging, a boundary function ensuring that only sample values with the same sign as the centre value will contribute to the final result, and having a third function which computes a function based on the B-mode-value of the data.

The upsampled data points are filled with sample values by interpolation. The interpolation method preserves sharp borders between high positive and high negative sample values. Accordingly, a normal interpolation scheme which simply interpolates between two data points by linearly weighting the sample value with the distance to each point is not used. Such normal interpolation interpolates between positive and negative values by using the zero-crossing.

One of the preferred interpolation methods is minimum-arc interpolation, which interpolates along a closed circle and always chooses the shortest (minimum) arc to connect two values.

In another preferred interpolation method, the signed sample values are split into a signed and non-signed component. Both components are interpolated separately and finally combined again into one value. This method is called sign-value mapping.

Thus, minimum-arc interpolation and sign-value mapping will emphasize alias effects on borders between high positive and high negative sample values. Especially when using minimum-arc interpolation, the alias region is strongly emphasized, since the interpolation method will go through the maximum velocity of one sign, for example positive, then switch the sign, and go back through the maximum negative velocity to the second sample value.

The pre-processed Doppler ultrasound data may be further processed after the filtering step. For example a 3D or a 4D dataset may be rendered, for example by surface rendering or volume rendering, in order to better visualize and analyse the data. The quality of the rendered image will be much better if the present pre-processing method is used, since the original Doppler ultrasound data have lower resolution, which results in blocky rendering, i.e. the sampling grid is clearly visible. In addition, any kind of noise may also destroy the desired visual effect after rendering. Therefore, the claimed combination of upsampling and e.g. bi-lateral filtering will greatly improve the rendering result.

Alternatively, the pre-processed dataset of Doppler ultrasound data may also be subjected to a quantitative analysis, wherein for example the user can directly measure the flow velocity in selected areas of the image. Furthermore, such analysis may for example comprise an automatic flow analysis.

The invention is also directed to a device for pre-processing a dataset of Doppler ultrasound data, the device being adapted to carry out the above-described method. Such device can be comprised within a medical ultrasound machine, for example within its image processing unit. Such image processing unit may be any type of digital computer, PC, workstation or CPU with working memory, e.g. RAM.

Alternatively, the device for pre-processing a dataset of Doppler ultrasound data may be a standalone computer, such as a PC, laptop, other portable computer or workstation. The computer preferably comprises a processing unit such as a CPU and a main storage, for example a random access memory (RAM). In addition, other features such as a hard disc, a monitor for viewing the processed data, a keyboard and/or mouse for receiving user input etc. may be present.

The invention is also directed to a computer program product directly loadable into the internal memory of a digital computer, comprising software code portions for performing the method described above when said computer program is run on a computer. Evidently, the software code portions should be computer-readable. The invention is also directed to the computer program per se, and to a computer usable medium or digitally readable medium such as a DVD or CD-ROM on which such computer program is stored.

The invention will now be described further by means of preferred embodiments with reference to the attached drawings, in which:

Fig. 1 is a colour-coded representation of a 2D dataset of Doppler ultra- sound data, overlaid on B-mode data;

Fig. 2 is a flow-diagram showing an embodiment of the inventive method;

Fig. 3 is a schematic representation of an upsampled 2D dataset of Doppler ultrasound data;

Fig. 4 is an illustration of linear interpolation;

Fig. 5 is an illustration of minimum-arc interpolation;

Fig. 6 is an illustration of sign-value mapping;

Fig. 7 is an example for an 1 D dataset of Doppler ultrasound data, illustrat- ing which data points contribute to a smoothed value at a certain lo- cation.

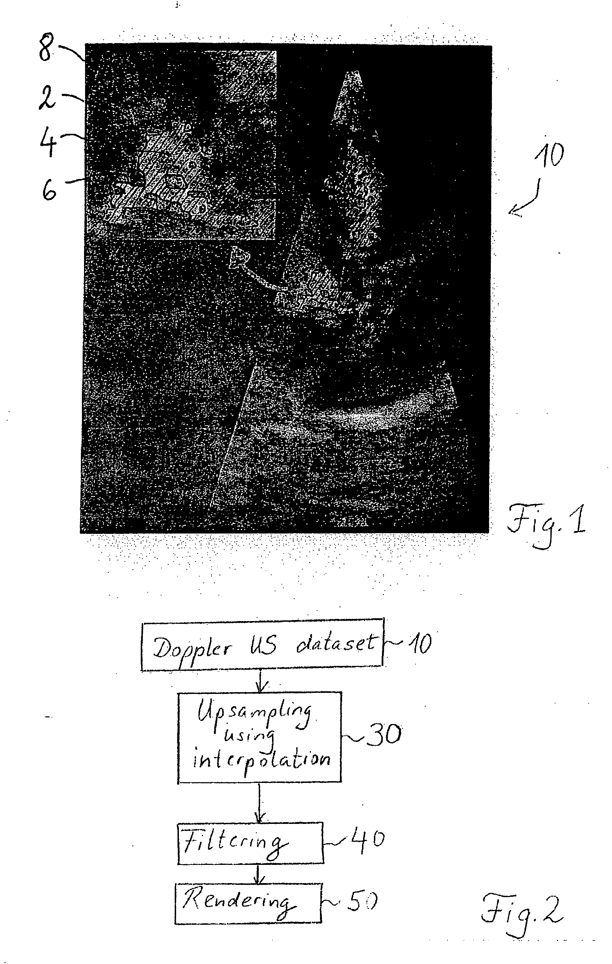

Fig. 1 is an illustration of a colour-coded representation of a 2D dataset of Doppler ultrasound data containing directional velocity data. The colour-coding is such that blue (dotted) represents a velocity away from the ultrasound probe, whereas yellow/red (shaded) represents a velocity towards the ultrasound probe. Decreasing velocity is represented by darker colours. Thus, black is zero velocity. The colour Doppler data is overlaid on a B-mode ultrasound image of the same area. The square on the upper left side is an enlarged detail from the wedge-shaped image on the right. On the detail, one can see that high negative velocities are represented in the blue (dotted) areas 2, whereas high positive velocities are represented as yellow (shaded) areas 4. The enlarged image section shows an alias region where high positive and high negative velocities are directly adjacent to each other at the borders 6 between blue and yellow.

The pre-processing method of the invention is ideally suitable for a kind of dataset as shown in fig. 1, since it will allow to retain the sharp boundary 6 between velocities with opposite signs, while it will also be possible to filter the homogenous regions, for example region 8, since these regions strongly suffer from a low sampling rate.

Fig. 2 is an illustration of an embodiment of the inventive method. Input to the algorithm is a Doppler ultrasound (US) dataset 10, which can be 1 D, 2D, 3D or 4D.

In the next step 30, the dataset 10 is upsampled in at least one dimension, for example by inserting new data points between the original data points. Sample values for the new data points are calculated by interpolation. Suitable interpolation methods will be presented in detail below.

In step 40, the upsampled and interpolated dataset is filtered with an edge-preserving smoothing method, for example a bi-lateral or tri-lateral filter as described above.

The pre-processed dataset can finally be further processed, for example rendered, in step 50.

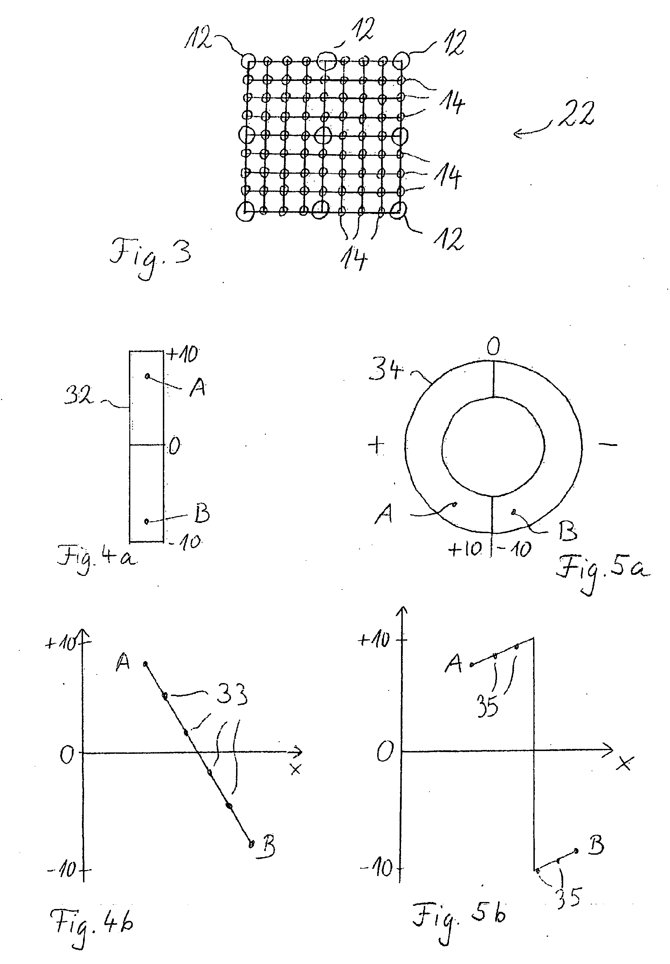

Fig. 3 is an illustration of the upsampling step 30. Fig. 3 shows a section of a 2D dataset, wherein the big circles 12 represent the original data points of the Doppler US dataset, which are in this case arranged on a Cartesian grid. Of course, any other geometry of the dataset is also possible, for example a non-Cartesian grid having polar coordinates. In the example of fig. 3, the dataset is upsampled by inserting three new data points 14 between each adjacent set of original data points 12, and filling the central space in each square having one existing data point at each corner in the same fashion. Thus, the new data points 14 are in this case also arranged on a Cartesian grid, and the resolution is increased in each direction (X, Y) by a factor of 4.

As already mentioned above, the upsampled dataset may preferably be stored in an intermediate buffer, using a higher precision data type to avoid artefacts due to quantization.

Sample values for the new (upsampled) data points 14 must be calculated by interpolation from the original data points 12. Several methods for doing this shall be discussed with reference to figs. 4-6.

Fig. 4 represents a linear interpolation for a 1 D case, where data points are to be inserted between two existing data points A, B, having relatively high values of opposite sign. Fig. 4a shows a bar 32 representing all possible sample values, which in this example can be between +10 and -10. Thus, +10 represents the maximum positive velocity or maximum positive Doppler shift, whereas -10 represents the maximum negative velocity or negative Doppler shift. As can be seen, point A has a relatively high positive value and B a relatively high negative value. In linear interpolation, a line is drawn between A and B in bar 32 which will intersect the zero-crossing at 0. This situation can be better seen in fig. 4b, where the sample values for four data points 33 inserted between A and B are plotted against the spatial direction X. As can be seen, the sharp edge between A and B is blurred out by this method. In the present application, this is seen as a disadvantage, because thereby aliasing regions would be smoothed over.

Fig. 5 is a representation of minimum-arc interpolation. Here, the sample values from +10 to -10 can be thought off as being arranged on a closed circle 34, wherein the maximum positive and the maximum negative values are adjacent to each other. Minimum-arc interpolation will interpolate along the closed circle and always choose the shortest (minimum) arc to connect two values. The results can be seen in fig. 5b, where again we have drawn in four new data points 35 inserted between A and B. Thus, on the way from A to B, the value of the new data points will even increase, since the shortest connection between A and B is not across the zero-crossing at 0, but across the interface between +10 and -10. Thus, when crossing that borderline, the interpolated values will drop sharply from +10 to -10, thereby emphasizing any borders in aliasing regions.

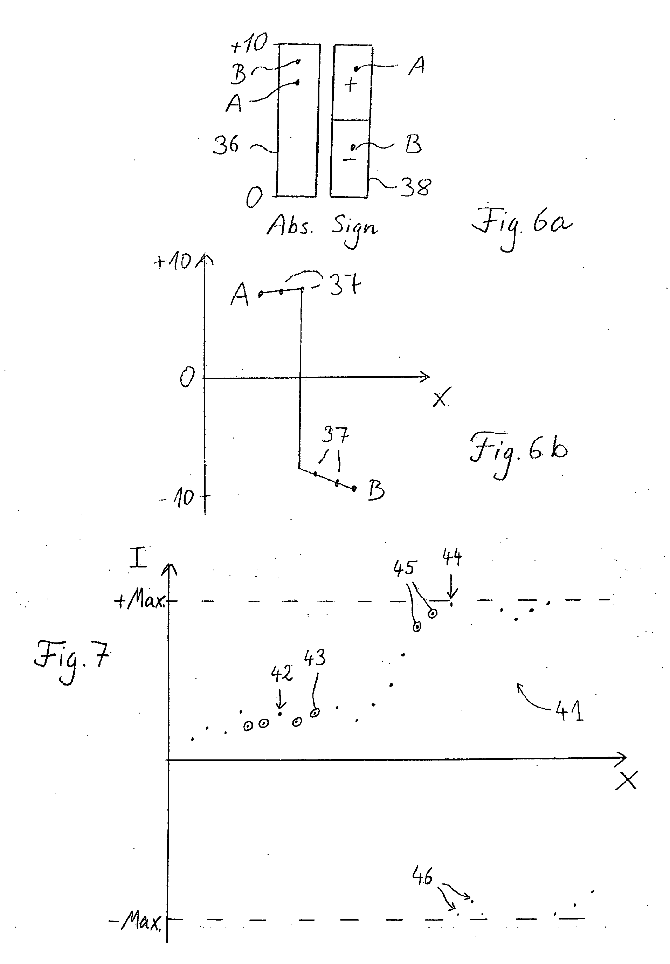

Fig. 6 is an illustration for sign-value mapping. According to fig. 6a, the sample value of each point A, B is split into an absolute component (see bar 36 on the left), which can be between 0 and +10, and a signed component (shown in bar 38 on the right), which can be either + or -. Each of these components is interpolated separately, for example by linear interpolation using linear distance weighting. The result can be seen in fig. 6b: because the absolute value of B is higher than that of A, the interpolated data points 37 will have linearly increasing absolute values when going from A to B. At some point, for example exactly in the middle between points A and points B, the sign will switch from positive to negative. Thus, with sign-value mapping, the absolute value of the interpolated sample values will never exceed the absolute value of the interpolation sources, i.e. original data points A, B.

Fig. 7 is used to illustrate an embodiment of the filtering step. It is a schematic representation of an 1 D ultrasound dataset consisting of a series of data points 41 arranged in spatial direction X and having a sample value or intensity varying between a maximum positive value +max. and a maximum negative -max. The example dataset 41 contains an aliasing region, where sample points representing high velocities in opposite directions are directly adjacent to each other. In clinical applications, these regions should not only be retained by the filtering step, but should be emphasized. On the other hand, the area on the left of fig. 7 contains some amount of noise and therefore requires low-pass filtering in order to achieve a reasonable rendering quality.

If the non-linear filtering scheme of claim 6 is used, one may for example choose a spatial support of 5 data points, i.e. 5 adjacent data points will contribute to the smoothed result for the central data point. This is demonstrated for example for data point 42 as the central data point. In this case, point 42 as well as two data points to the left and two data points to the right will be convoluted with the kernel function, for example a Gaussian function. These data points are circled and designated with reference number 43. Because all points 42 and 43 have the same sign (positive), the boundary function given above will always assume the value of 1. Therefore, all points 43 and 42 will be averaged with for example a Gaussian weighting in order to yield the smoothed sample value for point 42.

A different situation is present for point 44 as the centre point. In this case, the two data points 45 to the left of point 44 are positive, and the two data points 46 to the right of point 44 have got an opposite sign (negative). Therefore, the boundary function will be 0 for points 46, and the sample values at these locations will not contribute to the final smoothed result for point 44. Instead, only the two data points 45 to the left of point 44, which are circled, will be averaged together with point 44 with e.g. a Gaussian weighting in order to yield a smoothed sample value for data point 44.

## Claims

1. A method for pre-processing a dataset (10) of Doppler ultrasound data comprising signed velocity data, the method comprising the following steps:

a) providing the dataset (10) of Doppler ultrasound data;

b) upsampling (20) the dataset (10) in at least one dimension by converting the dataset to a finer grid, wherein sample values (14) for the upsampled dataset (22) are calculated by interpolation (30), namely the sample values for the new data points (14) are calculated by an interpolation method (34, 36, 38) which preserves sharp borders (6) between high positive and high negative sample values;

c) filtering (40) the upsampled dataset (22) with an edge-preserving smoothing method in those dimensions which have been upsampled in step b, wherein the edge-preserving smoothing method is a non-linear filtering step in which only those data points (45) having the same sign as a data point (44) at a certain location contribute to the smoothed value at that certain location.

2. The method of claim 1, wherein the edge-preserving smoothing method comprises an at least bi-lateral filter.

3. The method of one of the preceding claims, wherein the edge-preserving smoothing method comprises a tri-lateral filter,

4. The method of one of the preceding claims, wherein the edge-preserving smoothing method calculates a filtered value $F(V_p)$ for a certain data point (44) at location p within the dataset from the following formula:

$$F(V_p) = sign(V_p) \frac{1}{W_p} \sum_{q \in S} K(\|p - q\|) B(V_p, V_q) abs(V_p)$$

wherein K is a filtering kernel, in particular a Gaussian or box function, S is the spatial support, $V_p$ is the sample value at location p, $abs(V_p)$ and $sign(V_p)$ are functions returning the absolute value and sign, respectively, of the sample value $V_p$, $W_p$ is a normalisation factor, and $B(V_p, Vq)$ is a non-linear function given by

$$B(V_p, V_q) = \begin{cases} 1 & \text{if } sign(V_p) = sign(V_q) \\ 0 & \text{if } sign(V_p) \neq sign(V_q) \end{cases},$$

wherein the normalisation factor is given by

$$W_p = \sum_{q \in S} K(\|p - q\|) B(V_p, V_q) \ .$$

5. The method of one of the preceding claims, wherein the dataset (10) of Doppler ultrasound data is two-dimensional, three-dimensional or four-dimensional, the fourth dimension being time.

6. The method of one of the preceding claims, wherein each of the upsampling step (20) and the filtering step (40) is carried out in two, three or four dimensions, wherein the smoothed dimension may also be time.

7. The method of one of the preceding claims, wherein the sample values for the new data points (14) are calculated by sign-value mapping or minimum arc interpolation.

8. A device for pre-processing a dataset (10) of Doppler ultrasound data, the device being adapted to carry out the method defined in any one of claims 1 to 7.

9. The device of claim 8, which is a medical Ultrasound apparatus.

10. A computer program product directly loadable into the internal memory of a digital computer, comprising software code portions for performing the method of any one of claims 1 to 7 when said product is run on a computer.

**Patentansprüche**

1. Verfahren zur Vorverarbeitung eines Datensatzes (10) von Doppler-Ultraschalldaten umfassend Geschwindigkeitsdaten mit Vorzeichen, wobei das Verfahren die folgenden Schritte umfasst:

   a) Bereitstellen des Datensatzes (10) von Doppler-Ultraschalldaten;
   b) Upsampeln bzw. Erhöhen der Abtastrate (20) des Datensatzes (10) in wenigstens einer Dimension durch Konvertierung des Datensatzes auf ein feineres Raster, wobei Abtastwerte (14) für den upgesampelten Datensatz (22) mittels Interpolation (30) berechnet werden, und zwar die Abtastwerte für die neuen Datenpunkte (14) mittels eines Interpolationsverfahrens (34, 36, 38) berechnet werden, welches scharfe Grenzen (6) zwischen sehr stark positiven und sehr stark negativen Abtastwerten beibehält;
   c) Filtern (40) des upgesampelten Datensatzes (22) mit einem kantenerhaltenden Glättungsverfahren in denjenigen Dimensionen, welche in Schritt b) upgesampelt worden sind, wobei das kantenerhaltende Glättungsverfahren ein nichtlinearer Filterschritt ist, bei welchem nur diejenigen Datenpunkte (45) mit demselben Vorzeichen wie ein Datenpunkt (44) an einem bestimmten Ort zu dem geglätteten Wert an dem bestimmten Ort beitragen.

2. Verfahren nach Anspruch 1, wobei das kantenerhaltende Glättungsverfahren einen wenigstens bilateralen Filter umfasst.

3. Verfahren nach einem der vorhergehenden Ansprüche, wobei das kantenerhaltende Glättungsverfahren einen trilateralen Filter umfasst.

4. Verfahren nach einem der vorhergehenden Ansprüche, wobei das kantenerhaltende Glättungsverfahren einen gefilterten Wert F(Vp) für einen bestimmten Datenpunkt (44) an einem Ort p innerhalb des Datensatzes aus folgender Formel berechnet:

$$F\left(V_p\right) = \text{sign}\left(V_p\right)\frac{1}{W_p} \sum_{q \in S} K\left(\|p-q\|\right) B\left(V_p, V_q\right) \text{abs}\left(V_p\right),$$

wobei K ein Filterkernel, insbesondere eine Gauß- oder Box- bzw. Rechteckfunktion, S die räumliche Unterstützung, Vp der Abtastwert am Ort p, abs(Vp) und sign(Vp) Funktionen, welche zu dem Absolutwert bzw. dem Vorzeichen des Abtastwerts Vp führen, Wp ein Normalisierungsfaktor und B(Vp, Vq) eine nichtlineare Funktion ist, welche ausgedrückt wird durch

$$B\left(V_p, V_q\right) = \begin{cases} 1 & \text{if sign}\left(V_p\right) = \text{sign}\left(V_q\right) \\ 0 & \text{if sign}\left(V_p\right) \neq \text{sign}\left(V_q\right), \end{cases}$$

wobei der Normalisierungsfaktor ausgedrückt wird durch

$$W_p = \sum_{q \in S} K\left(\|p-q\|\right) B\left(V_p, V_q\right).$$

5. Verfahren nach einem der vorhergehenden Ansprüche, wobei der Datensatz (10) von Doppler-Ultraschalldaten zweidimensional, dreidimensional oder vierdimensional ist, wobei die vierte Dimension die Zeit ist.

6. Verfahren nach einem der vorhergehenden Ansprüche, wobei sowohl der Upsampling-Schritt (20) als auch der Filterschritt (40) in zwei, drei oder vier Dimensionen ausgeführt wird, wobei die geglättete Dimension auch die Zeit sein kann.

7.  Verfahren nach einem der vorhergehenden Ansprüche, wobei die Abtastwerte für die neuen Datenpunkte (14) mittels Vorzeichenwert-Mapping bzw. -Zuordnung oder Mindestbogeninterpolation berechnet werden.

8.  Vorrichtung zur Vorverarbeitung eines Datensatzes (10) von Doppler-Ultraschalldaten, wobei die Vorrichtung geeignet ist, das in einem der Ansprüche 1 bis 7 definierte Verfahren durchzuführen.

9.  Vorrichtung nach Anspruch 8, wobei diese ein medizinisches Ultraschallgerät ist.

10. Computerprogrammprodukt, welches direkt in den internen Speicher eines digitalen Computers geladen werden kann, umfassend Softwarecodeabschnitte zum Durchführen des Verfahrens nach einem der Ansprüche 1 bis 7, wenn das Produkt auf einem Computer ausgeführt wird.

**Revendications**

1.  Procédé de prétraitement d'un ensemble de données (10) d'ultrasons Doppler comprenant les données de vitesse réelles, avec le procédé incluant les étapes suivantes :

    a) fournir l'ensemble de données (10) d'ultrasons Doppler ;
    b) suréchantillonner (20) l'ensemble de données (10) en, au moins, une dimension, en transformant l'ensemble de données en une grille plus fine, dans laquelle les valeurs d'échantillonnage (14) pour l'ensemble de données suréchantillonnées (22) sont calculées en utilisant une méthode d'interpolation (30), c'est-à-dire les valeurs d'échantillonnage pour les nouveaux points de données (14) sont calculées avec la méthode d'interpolation (34,36,38) qui préserve des bords précis (6) entre les valeurs d'échantillonnage hautement positives et hautement négatives ;
    c) filtrer (40) l'ensemble de données suréchantillonnées (22) avec une méthode de lissage préservant les bords dans les dimensions qui ont été suréchantillonnées dans l'étape b, dans laquelle la méthode de lissage préservant les bords consiste à une étape de filtrage non linéaire dans laquelle uniquement ces points de données (45) qui possèdent le même signe qu'un point de données (44) dans un certain emplacement contribuent à la valeur lissée dans un certain emplacement.

2.  Procédé de la revendication 1, dans lequel la méthode de lissage préservant les bords comprend au moins un filtre bilatéral.

3.  Procédé selon l'une des revendications précédentes, dans lequel la méthode de lissage préservant les bords comprend un filtre trilatéral.

4.  Procédé selon l'une des revendications précédentes, dans lequel la méthode de lissage préservant les bords calcule une valeur filtrée F(Vp) pour un certain point de données (44) dans l'emplacement p au sein de l'ensemble de données à partir de la formule suivante :

$$F\!\left(V_p\right) = \text{sign}\!\left(V_p\right)\frac{1}{W_p}\sum_{q\in S}K\!\left(\|p-q\|\right)B\!\left(V_p,V_q\right)\text{abs}\!\left(V_p\right)$$

dans laquelle K est un noyau de filtrage, en particulier une fonction gaussienne ou fonction box, S est le support spatial, Vp est une valeur d'échantillonnage dans l'emplacement p, abs (Vp) et signe (Vp) sont des fonctions qui inversent la valeur absolue et le signe, respectivement, de la valeur d'échantillonnage Vp, Wp est un facteur de normalisation, et B(Vp,Vq) est une fonction non-linéaire donnée par

$$B\!\left(V_p,V_q\right) = \begin{cases} 1 & \text{if } \text{sign}\!\left(V_p\right) = \text{sign}\!\left(V_q\right) \\ 0 & \text{if } \text{sign}\!\left(V_p\right) \neq \text{sign}\!\left(V_q\right) \end{cases}'$$

dans laquelle le facteur de normalisation est donnée par

$$W_p = \sum_{q \in S} K\left(\|p - q\|\right) B\left(V_p, V_q\right) \; .$$

5. Procédé selon l'une des revendications précédentes, dans lequel l'ensemble de données (10) d'ultrasons Doppler est bidimensionnel, tridimensionnel ou quadridimensionnel, avec le temps étant la quatrième dimension.

6. Procédé selon l'une des revendications précédentes, dans lequel chacune des étapes de suréchantillonnage (20) et l'étape de filtrage (40) sont réalisées en deux, trois ou quatre dimensions, dans lesquelles la dimension lissée peut également être le temps.

7. Le procédé selon l'une des revendications précédentes, dans lequel les valeurs d'échantillonnage pour les nouveaux points de données (14) sont calculées en repérant la valeur du signe ou interpolation d'arc au minimum.

8. Dispositif pour prétraiter un ensemble de données (10) d'ultrasons Doppler, le dispositif étant agencé pour réaliser le procédé 'selon d'une des revendications 1 à 7.

9. Dispositif selon la revendication 8 qui est un appareil à ultrasons à des fins médicaux.

10. Produit logiciel d'ordinateur directement téléchargeable dans une mémoire interne d'un ordinateur numérique, comprenant des portions de code de software pour mettre en oeuvre le procédé selon l'une des revendications 1 à 7 quand le produit évoqué fonctionne dans un ordinateur.

8
2
4
6

10

Fig. 1

Doppler US dataset — 10

Upsampling using interpolation — 30

Filtering — 40

Rendering — 50

Fig. 2

Fig. 3

Fig. 4a

Fig. 5a

Fig. 4b

Fig. 5b

+10

B

A

36

0

Abs. Sign

+10

+10

A ·· · —37

0

X

37

-10

B

Fig. 6a

Fig. 6b

I

+Max.

45  44

42  43

41

Fig. 7

X

46

-Max.

**EP 2 315 046 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008086820 A1

**Non-patent literature cited in the description**

- **TERRANCE BOULT ; ROBERT R. MELTER.** G-neighbors. *SPIE Vol. 2060, Vision Geometry II,* 1993, 96-108